# EUROPEAN PATENT APPLICATION

(11) **EP 2 363 190 A1**
(43) Date of publication of application: **07.09.2011**
(21) Application number: 11001456.0
(22) Date of filing: 22.02.2011
(51) Int. Cl.: B01D 45/06, B01D 45/08, F24C 15/20

(54) **Filter for the treatment of exhaust fumes**

(30) Priority: 03.03.2010 IT AN20100024
(71) Applicant: SIFIM S.r.l., 60035 Jesi (AN) (IT)
(72) Inventor: Pelagaggis, Luca, 60020 Falconara Marittima (AN) (IT)
(74) Representative: Cacciamani, Clizia

(57) **Abstract**

A baffle filter comprising a peripheral frame in which a plurality of shaped members preferably made of a metallic material are suitably positioned so as to form a labyrinth path, said shaped members being provided with a bottom wall and at least three side walls which extend from said bottom wall with a given inclination from the plane of said bottom wall and being suitably spaced from each other.

## Description

The present invention relates to filters for the treatment of exhaust fumes from kitchens or the like, and in particular relates to the so-called baffle filters used for this purpose.

The labyrinth structure is commonly used in devices designed to treat the fumes produced by kitchens, for both home and professional use; this type of structure is usually formed by preferably metallic shaped members arranged inside a suitable frame so as to create a winding path for the fumes, referred to precisely as a "labyrinth", so that the particles of fat are deposited on the walls of the above mentioned path. One problem arising from the prior art is that these filters are correspondingly more efficient the greater the winding configuration of the path which the fumes have to follow, but obviously the complexity of the path is dependent upon the constructional complexity of the shaped members used and the way in which these shaped members are assembled to form the filter.

In general, to obtain structures which are relatively complex using fairly simple shaped members, it is required to assemble parts with quite different shapes in a complex manner, this involving fairly high costs and long manufacturing times.

The aim of the present invention is therefore to provide a baffle filter for treating the fumes from kitchens or the like, which is able to provide a path for the above mentioned fumes which is very complex, using a base structure which is extremely simple and can be easily assembled.

Therefore, the object of the present invention is a baffle filter comprising a peripheral frame in which a plurality of shaped members preferably made of a metallic material are suitably positioned so as to form a labyrinth path, said shaped members being provided with a bottom wall and at least three side walls which extend from said bottom wall with a given inclination from the plane of said bottom wall and being suitably spaced from each other. Such shaped members can be integrally formed, i.e. they are obtained by assembling two or more different shaped members.

In a preferred embodiment, said shaped members are formed by a first element having a substantially C-shaped cross-section and accommodating therein a second element having a C-shaped cross-section which is similar to but smaller than that of said first element. In a variant embodiment, the side walls of said first element have an angle of inclination with respect to the plane of the bottom wall which is smaller than that of the side walls of said second element.

Further advantages and features will be apparent from the following detailed description of an embodiment of the device according to the present invention, which is set out by way of illustration, and not by way of limitation, with reference to the accompanying drawings wherein:
Figure 1 is a plan view of an embodiment of the device according to the present invention;
Figure 2 is a cross-sectional view of a detail of figure 1; and
Figure 3 is a plan view with parts cross-sectioned of a detail of the device according to the invention.

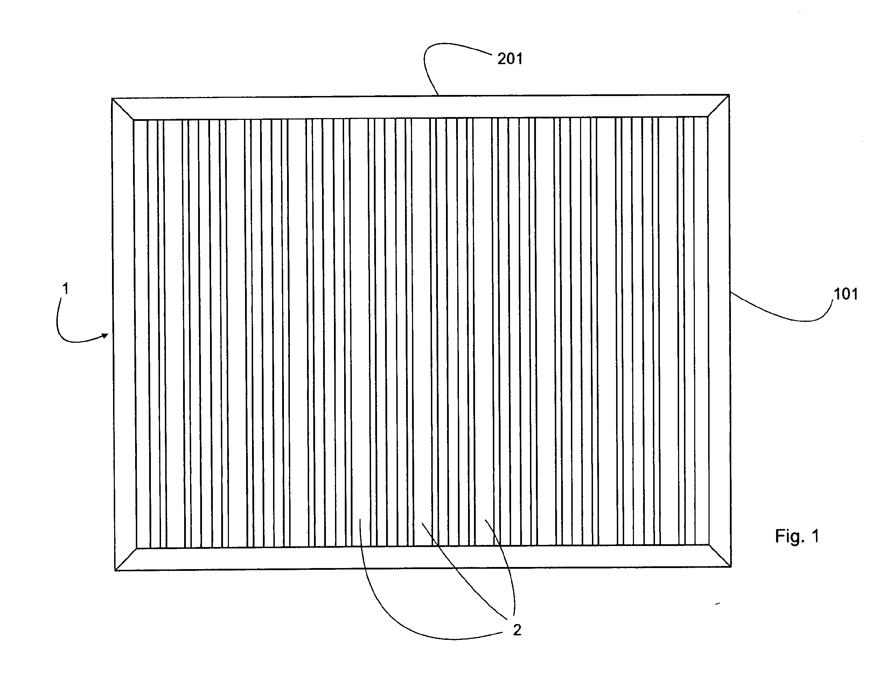

Figure 1 shows a preferred embodiment of the device according to the invention; reference numeral 1 denotes the peripheral frame which forms the structure of the baffle filter. The frame 1 has a substantially rectangular shape, with two major sides 201 arranged perpendicularly with respect to the shaped members 2 contained within the frame, while two minor sides 101 are parallel to said shaped members 2.

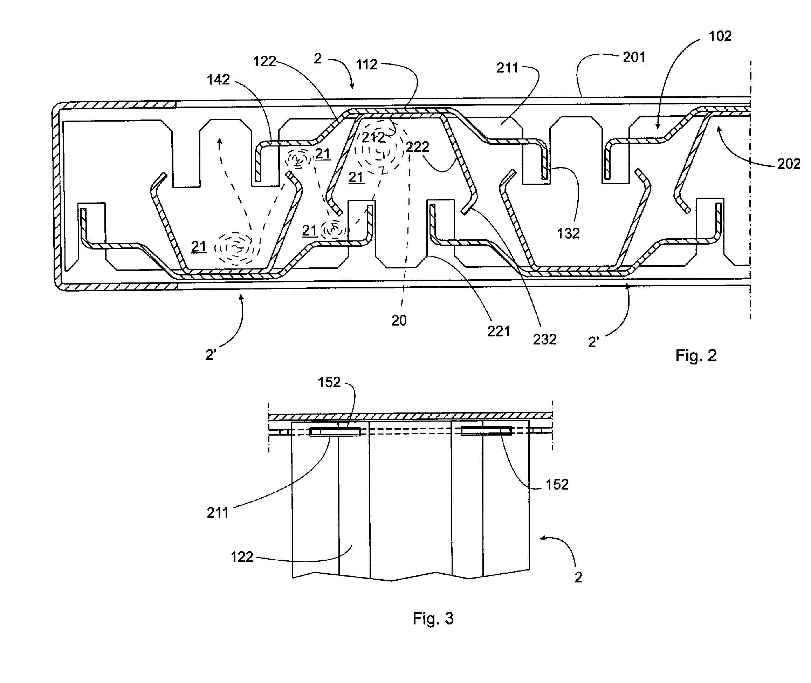

Figure 2 shows the cross-section through a detail of the filter according to Figure 1; identical parts are indicated by identical reference numerals. In the embodiment shown, the shaped members 2, 2' inserted inside the frame 1 are consisting of a first element 102 which is connected to the major side 101 of the frame by joining to the flange 211 formed in the wall of the major side 201 of the frame 1, and a second element 202 arranged within said first element 102 and connected thereto by means of respective bottom walls 212 and 112. The shaped members 2 and the shaped members 2' face each other and are arranged according to a substantially quincuncial arrangement.

The side walls 122 of the first element 102 have, at least along the first length which extends from the bottom wall 112, an inclination with respect to the bottom wall 112 which is as relatively small as about 30°. Instead, the side walls 222 of the element 202 are inclined at an angle of about 60°. It is noted that the side walls 222 are provided at their free ends with flanges 232 folded towards the inside of said element 202. Instead, the walls 122 of said first element 102 have respectively a wall section 142 which is parallel to the plane of the bottom wall 112, and an end flange 132 which is folded perpendicularly with respect to the same bottom wall 112.

Figure 3 shows a plan detail view of the filter according to the invention; identical parts are indicated by identical reference numerals. The figure shows eyelets 152 formed in the side walls 122 of the first element 102 of the shaped member 2, in which the ends of the flanges 211 are inserted. The operating principle of the device according to the present invention will be evident from the description below. The structure of the filter as described in the above description allows the formation of a path for the fumes which is dramatically complex compared to the simplicity of its structure. As schematically illustrated by the path 20 shown in broken lines in Figure 2, the flow of the fumes follows a fairly winding path along which it often encounters the side walls 122, 222 of the shaped member 2, which are therefore able to collect the droplets of fat dispersed in the fumes.

Advantageously, numerous turbulent zones 21 are formed, these enhancing on the one hand the deposition of the greasy particles conveyed by the hot air flow, and on the other hand allowing the filter to block any emission of flames.

Moreover, the embodiment shown achieves the advantage of providing a labyrinth which is effective with a minimum thickness and an apparent constructional simplicity. Particularly, the overall thickness of the filter may be equal to about 30mm, and specifically less than 25mm.

## Claims

1. A baffle filter comprising a peripheral frame in which a plurality of shaped members preferably made of a metallic material are suitably positioned so as to form a labyrinth path, said shaped members being provided with a bottom wall and at least three side walls which extend from said bottom wall with a given inclination from the plane of said bottom wall and being suitably spaced from each other.

2. The filter according to claim 1, wherein said shaped members are integrally formed.

3. The filter according to claim 1, wherein said shaped members are obtained by assembling two or more different shaped members.

4. The filter according to any one of the preceding claims 1 to 3, wherein said shaped members are arranged within said filter so as to face each other in a substantially quincuncial arrangement.

5. The filter according to claim 3 or 4, wherein said shaped members are formed by a first element having a substantially C-shaped cross-section and accommodating therein a second element having a C-shaped cross-section which is similar to but smaller than that of said first element.

6. The filter according to claim 5, wherein the side walls of said first element have an angle of inclination with respect to the plane of the bottom wall which is smaller than that of the side walls of said second element.

7. The filter according to any one of the preceding claims 1 to 6, wherein said peripheral frame has an overall height of less than 30mm and preferably of about 25mm.
